# EUROPÄISCHE PATENTANMELDUNG

(11) **EP 1 795 730 A2**
(43) Veröffentlichungstag der Anmeldung: **13.06.2007**
(21) Anmeldenummer: 06018913.1
(22) Anmeldetag: 09.09.2006
(51) Int. Cl.: F02M 25/07

(54) **Ventileinrichtung**

(30) Priorität: 10.12.2005 DE 102005059120
(71) Anmelder: ElringKlinger AG, 72581 Dettingen/Erms (DE)
(72) Erfinder: Zika-Beyerlein, Beate, 90482 Nürnberg (DE); Lang, Markus, 92318 Neumarkt (DE)
(74) Vertreter: Bartels & Partner

(57) **Zusammenfassung**

Eine Ventileinrichtung zum Sperren und Freigeben eines Durchganges zwischen mit Fluiddruck belastbaren Druckräumen, insbesondere eines Durchganges zur Abgasrückführung bei Verbrennungsmotoren, mit mindestens einem Blattfederelement (23), das zur Bildung eines Flatterventils zwischen einer Ventilsitzfläche (25) an einem Einsatzkörper und einer die Öffnungsbewegung des Blattfederelementes (23) von der Ventilsitzfläche (25) weg begrenzenden Abstützfläche (15) angeordnet ist, weist ein zwischen die Druckräume einsetzbares Trägerblech auf, das an zumindest einem Durchbruch zumindest eine Abstützfläche (15) als einstückig abgebogenes Teil und am jeweiligen Durchbruch einen Sitz (17) für einen das betreffende Blattfederelement (23) tragenden, zweiten Einsatzkörper und den die Ventilsitzfläche (25) bildenden ersten Einsatzkörper auf.

## Beschreibung

Die Erfindung bezieht sich auf eine Ventileinrichtung zum Sperren und Freigeben eines Durchganges zwischen mit Fluiddruck belastbaren Druckräumen, insbesondere eines Durchganges zur Abgasrückführng bei Verbrennungsmotoren, mit mindestens einem Blattfederelement, das zur Bildung eines Flatterventils zwischen einer Ventilsitzfläche an einem Einsatzkörper und einer die Öffnungsbewegung des Blattfederelementes von der Ventilsitzfläche weg begrenzenden Abstützfläche angeordnet ist.

Eine derartige Ventileinrichtung ist beispielsweise aus der EP 1 098 085 A2 bekannt. Wenn eine derartige Ventileinrichtung dazu benutzt wird, die Abgasrückführung bei Verbrennungsmotoren zu regulieren, indem sie als Rückschlagventil wirkt, das bei einem den herrschenden Abgasdruck übersteigenden Ladedruck schließt, ist ein schnelles Ansprechen des Ventils, also schlagartiges Öffnen und Schließen, funktionswesentlich. Die Ausbildung der Ventileinrichtung als Flatterventil kommt dieser Forderung entgegen, weil das als Ventil-Schließkörper dienende Blattfederelement eine verhältnismäßig geringe Massenträgheit aufweist und somit schell beweglich ist. Andererseits sind Flatterventile hinsichtlich des erreichbaren Öffnungsquerschnittes verhältnismäßig begrenzt, was zu geringen Durchsatzmengen während der Überdruckperiode und zu Druckverlusten führt. Um dem entgegen zu wirken werden Ventileinrichtungen für derartige Einsatzzwecke üblicherweise mehrflutig ausgebildet. In nachteiliger Weise führt dies jedoch zu einem hohen Fertigungs- und Montageaufwand.

Im Hinblick hierauf liegt der Erfindung die Aufgabe zugrunde, eine Ventileinrichtung zur Verfügung zu stellen, die den zu stellenden Anforderungen sowohl hinsichtlich des schnellen Ansprechsverhaltens als auch des ausreichenden Öffnungsquerschnittes gerecht wird, sich nichtsdestoweniger jedoch durch einen besonders einfachen Aufbau mit entsprechend niedrigen Fertigungs- und Montagekosten auszeichnet.

Erfindungsgemäß ist diese Aufgabe durch eine Ventileinrichtung gelöst, die die Merkmale des Patentanspruches 1 in seiner Gesamtheit aufweist.

Demgemäß ist die erfindungsgemäße Ventileinrichtung aus drei Hauptbestandteilen gebildet, einem Trägerblech mit zumindest einem Durchbruch sowie einem ersten und einem zweiten Einsatzkörper, die in den jeweiligen Durchbruch des Trägerbleches einsetzbar sind, das seinerseits mit ihm einstückige Abstützflächen in Form abgebogener Teile aufweist. Aufgrund dieses einfachen Aufbaues, bei dem in jeweils einem Durchbruch des Trägers zwei Einsatzelemente aufgenommen sind, ohne dass Verbindungsmittel oder gegenseitige Befestigungsmittel erforderlich wären, läßt sich eine vielflutige Bauweise mit geringstem Fertigungs- und Montageaufwand verwirklichen, indem eine entsprechende Anzahl von Durchbrüchen im Trägerblech für jeweils gleichartig gefertigte Einsatzkörper vorgesehen wird. Durch die Möglichkeit, auf einfache Weise eine vielflutige Bauweise zu realisieren, lassen sich ohne weiteres große Öffnungsquerschnitte erreichen.

Das Trägerblech kann in der Art einer Flachdichtung zwischen den Druckräumen einspannbar sein, wobei Dichtsicken am Trägerblech und/oder an Einsatzkörpern ausgebildet sein können. In vorteilhafter Weise kann dadurch in Mehrfachfunktion die Ventileinrichtung die Abdichtung zwischen den aneinander angrenzenden Druckräumen bilden oder Teil der Abdichtung bilden, beispielsweise zwischen zwei miteinander verschraubten Gehäuseelementen, von denen eines zum Abgassystem und das andere zum Ladeluftsystem eines Verbrennungsmotors gehört.

Die Ausbildung der Abstützflächen am Trägerblech kann derart erfolgen, dass an jedem Durchbruch des Trägerbleches an zwei parallelen, einander gegenüberliegenden geraden Rändern des Durchbruches je ein Teil als Abstützfläche in Richtung der Strömung des durchfließenden Fluides und zueinander hin abgebogen sind. Dadurch lassen sich an jedem Durchbruch zwei Flatterventile ausbilden, wobei zwischen den freien Enden der als Abstützflächen für jeweils ein Blattfederelement dienenden abgebogenen Teile ein zweiflutiger Durchgang gebildet wird.

Der Sitz für ersten und zweiten Einsatzkörper kann in vorteilhafter Weise an den Rändern der im Umriss im großen Ganzen rechteckförmigen Durchbrüche im Trägerblech vorgesehen sein.

Die zweiten Einsatzkörper, mit denen die Blattfederelemente einstückig sind, können dünnwandige Körper sein, deren Umriss den den Sitz bildenden Rändern der Durchbrüche des Trägerbleches angepaßt ist und die ihrerseits Durchbrüche bilden, die mit den Durchbrüchen des Trägerbleches näherungsweise deckungsgleich sind, wobei an zwei einander gegenüberliegenden Rändern die Blattfederelemente einstückig so abgebogen und geformt sind, dass sie sich entlang der jeweils benachbarten Abstützfläche des Trägerbleches erstrecken.

Das Trägerblech kann bei vorteilhaften Ausführungsbeispielen im großen Ganzen rechteckförmig sein und in zueinander symmetrischer Anordnung vier gleichartige Durchbrüche für die Aufnahme jeweils gleichartiger erster und zweiter Einsatzkörper aufweisen. Hierbei bildet das Trägerblech die tragende Basis für eine achtflutige Flatterventileinheit.

Bei besonders vorteilhaften Ausführungsbeispielen ist der jeweilige erste Einsatzkörper als Düseneinsatz gestaltet, der Wandteile aufweist, die sich von einer vom Sitz des Trägerbleches getragenen Randeinfassung weg entlang der Strömung des Fluides erstrecken und zusammen mit dem sich entlang der zugeordneten Abstützflächen erstreckenden jeweiligen Blattfederelemente Strömungs-Leitflächen bilden. Dadurch erreicht man eine Strömungsoptimierung für das durchfließende Fluid, beispielsweise einen Abgasstrom, so dass sich geringere Druckverluste durch Verwirbelungen ergeben.

Dabei kann die Anordnung so getroffen sein, dass der jeweilige Düseneinsatz Wandteile aufweist, die von einem Scheitelbereich, der sich an die Randeinfassung anschließt, ausgehen und miteinander einen spitzen Winkel einschließen, dergestalt, dass eine zur jeweils benachbarten Abstützfläche konvergierend verlaufende Ebene gebildet wird und die Wandteile zwischen ihrem Endrand und der Abstützfläche einen den Durchgang des Fluides begrenzenden Spalt definieren. Somit befindet sich stromaufwärts jedes Durchganges ein Düsentrichter mit zwei konvergierenden Leitflächen, so dass sich an den am Spalt gebildeten Durchgängen jeweils eine optimale Strömung hoher Geschwindigkeit einstellt.

Die den Spalt begrenzenden Endränder können hierbei die Ventilsitzflächen für das den Spalt jeweils verschließende Blattfederelement bilden.

Nachstehend ist die Erfindung anhand eines in der Zeichnung dargestellten Ausführungsbeispieles im Einzelnen erläutert. Es zeigen:
- Fig. 1 eine perspektivische Schrägansicht eines dem Ladeluftsystem eines Verbrennungsmotors zugehörigen Gehäuseelementes mit an einer Gehäuseöffnung vorgesehener Ventileinrichtung gemäß einem Ausführungsbeispiel der Erfindung;
- Fig. 2 eine perspektivische Schrägansicht nur des Ausführungsbeispieles der erfindungsgemäßen Ventileinrichtung;
- Fig. 3 eine in etwas größerem Maßstab als Fig. 2 gezeichnete, perspektivische Schrägansicht lediglich des Trägerbleches des Ausführungsbeispieles;
- Fig. 4 eine im Maßstab entsprechend Fig. 3 gezeichnete perspektivische Schrägansicht von Einsatzkörpern, die in Durchbrüche des Trägerbleches von Fig. 3 einsetzbar sind;
- Fig. 5 eine der Fig. 4 ähnliche Darstellung zusätzlicher Einsatzkörper in Form von Düseneinsätzen, die zusammen mit den Einsatzkörpern von Fig. 4 in die Durchbrüche des Trägerbleches von Fig. 3 einsetzbar sind, und
- Fig. 6 eine in gleichem Maßstab gezeichnete Seitenansicht des kompletten Ausführungsbeispieles, wobei die Einsatzkörper beider Arten in die Durchbrüche des Trägerbleches eingesetzt sind.

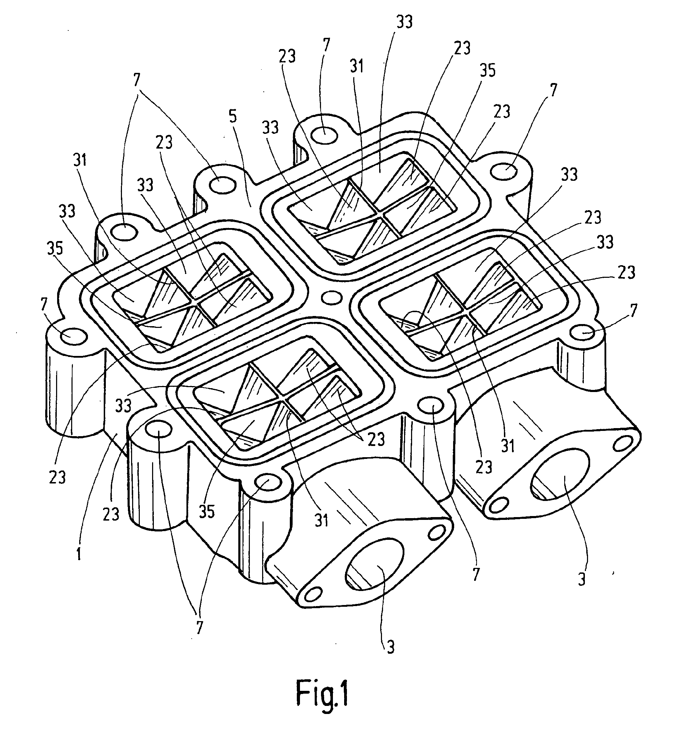

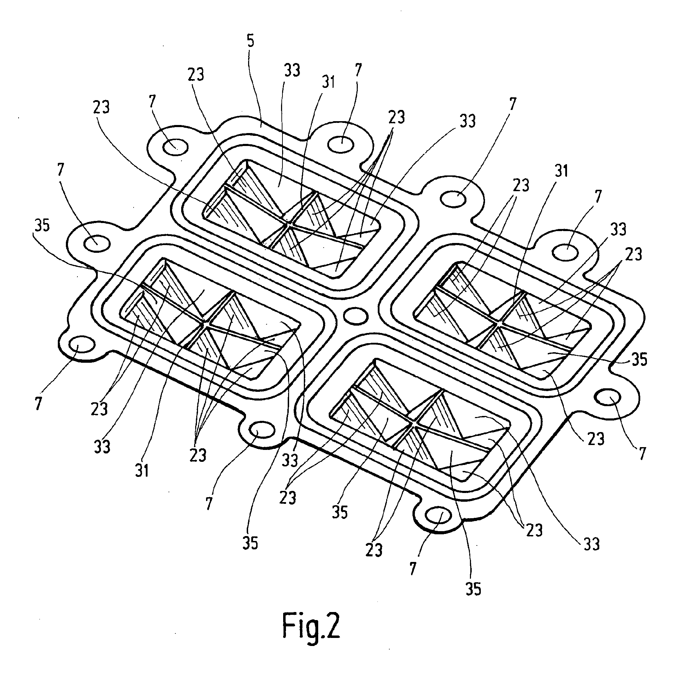

Fig. 1 zeigt ein Gehäuseelement 1, dessen Innenraum einen Druckraum bildet, der über seitliche Gehäuseöffnungen 3 mit dem Ladeluftsystem eines Verbrennungsmotors verbindbar ist. Die obere, offene Seite des Gehäuseelementes 1 ist mit einem nicht gezeigten weiteren Gehäuseelement verbindbar, das einen angrenzenden, weiteren Druckraum beinhaltet, der mit dem Abgassystem des Verbrennungsmotors in Verbindung ist. Zwischen die beiden offenen Seiten des in Fig. 1 gezeigten Gehäuseelementes und des sich anschließenden, nicht gezeigten Gehäuseelementes ist das in Fig. 2 gesondert dargestellte Ausführungsbeispiel der erfindungsgemäßen Ventileinrichtung eingebaut.

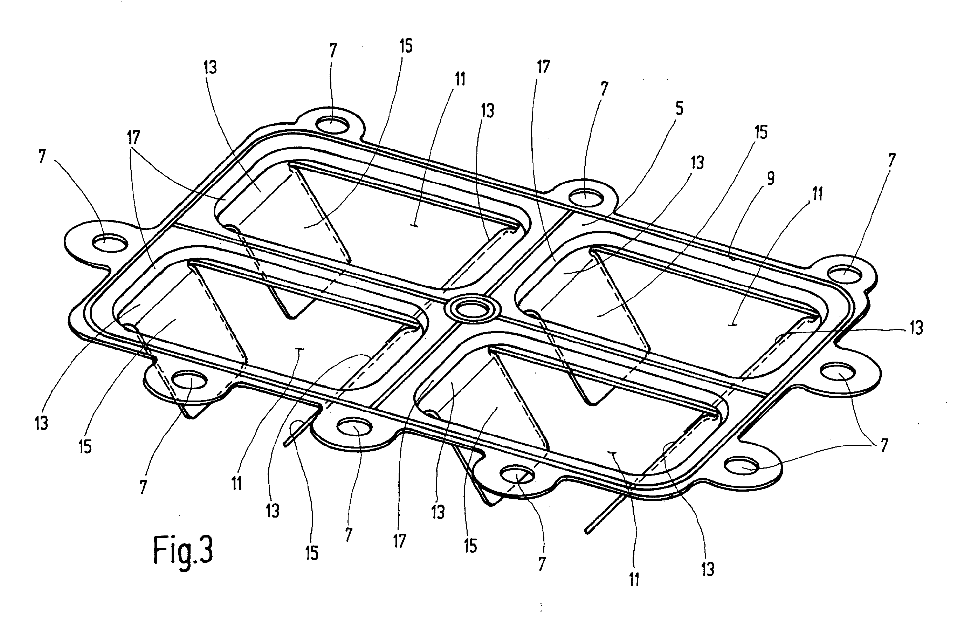

Wie den Fig. 1, 2 und 3 entnehmbar ist, weist die Ventileinrichtung als tragenden Hauptkörper ein Trägerblech 5 auf, das in Fig. 3 gesondert dargestellt ist und mit seinem Umriss an die im wesentlichen rechteckförmige Öffnung des Gehäuseelementes 1 angepaßt ist, wobei entlang der Außenränder des abgerundete Ecken aufweisenden Trägerbleches 5 Durchgangslöcher 7 für den Durchgriff von Befestigungsschrauben (nicht gezeigt) vorgesehen sind, mit denen das abgasseitige, nicht gezeigte Gehäuseelement mit dem in Fig. 1 gezeigten Gehäuseelement 1 verschraubbar ist, wobei das Trägerblech 5, und damit die Ventileinrichtung, zwischen den Gehäuseelementen eingespannt ist.

Wie besonders deutlich aus Fig. 3 zu ersehen ist, weist das Trägerblech 5 entlang seiner Ränder eine durchgehend umlaufende Sicke 9 auf, so dass das zwischen den Gehäuseelementen eingespannte Trägerblech 5 in der Art einer Flachdichtung als Dichtelement wirken oder zur Abdichtung zwischen den Gehäuseelementen beitragen kann, beispielsweise in Zusammenwirkung mit einer Umspritzung mit einem Dichtungswerkstoff. Alternativ oder zusätzlich können Dichtsicken auch an den vom Trägerblech 5 gehaltenen Bauteilen der Ventileinrichtung ausgebildet sein.

Wie ebenfalls aus Fig. 3 besonders deutlich zu ersehen ist, befinden sich im Trägerblech 5 vier Durchbrüche 11, die, von abgerundeten Ecken abgesehen, rechteckförmig und im Trägerblech 5 paarweise und symmetrisch verteilt angeordnet sind. An jedem Durchbruch 11 sind an den voneinander entfernter gelegenen, einander gegenüberliegenden Rändern 13 Teile so abgebogen, dass jedes abgebogene Teil eine Abstützfläche 15 bildet, die beim vorliegenden Beispiel mit dem Trägerblech 5 einen im Bereich von 40° bis 60° gelegenen Winkel bildet, wobei diese Teile in Strömungsrichtung abgebogen sind.

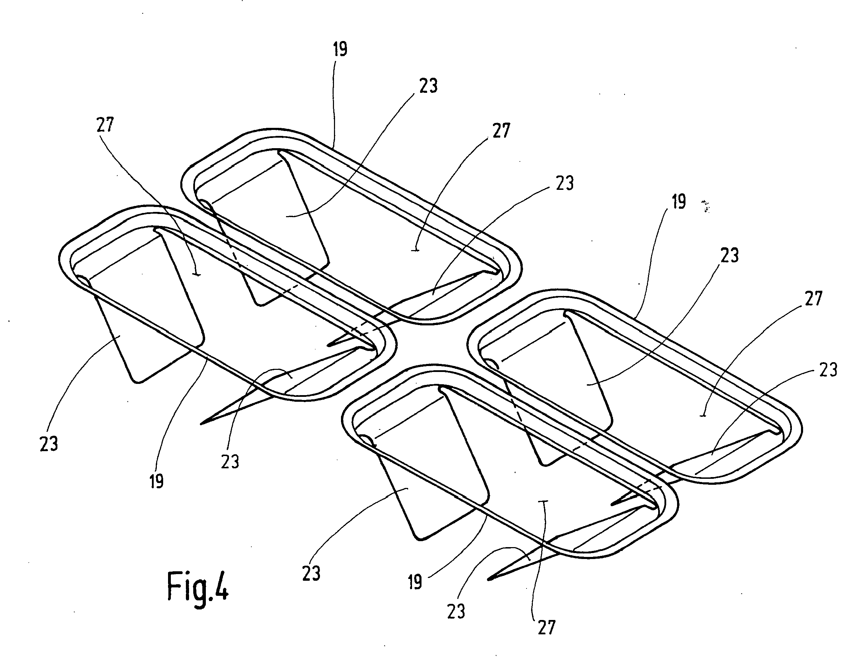

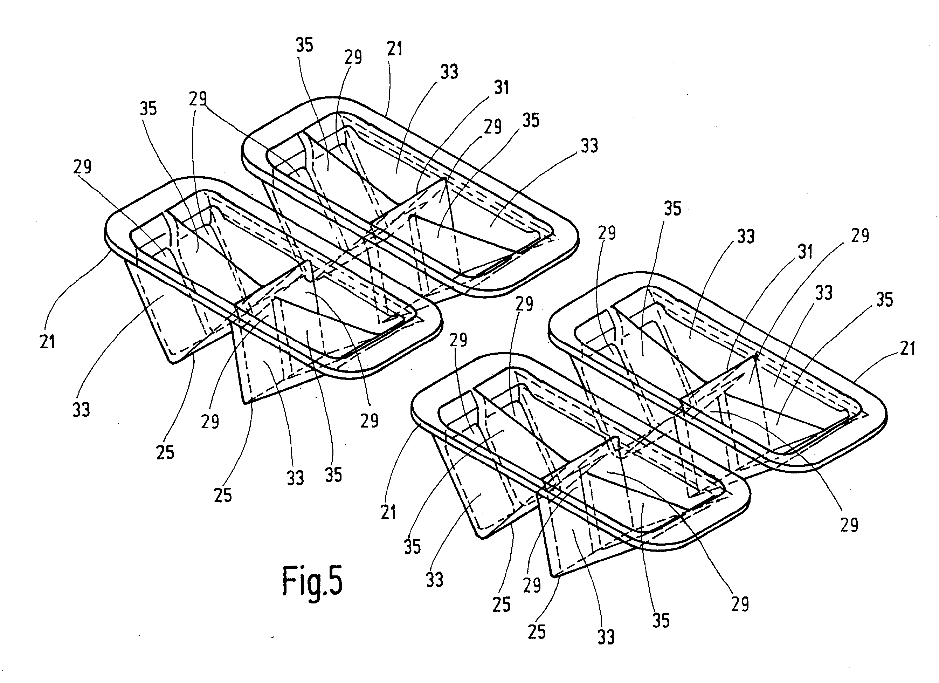

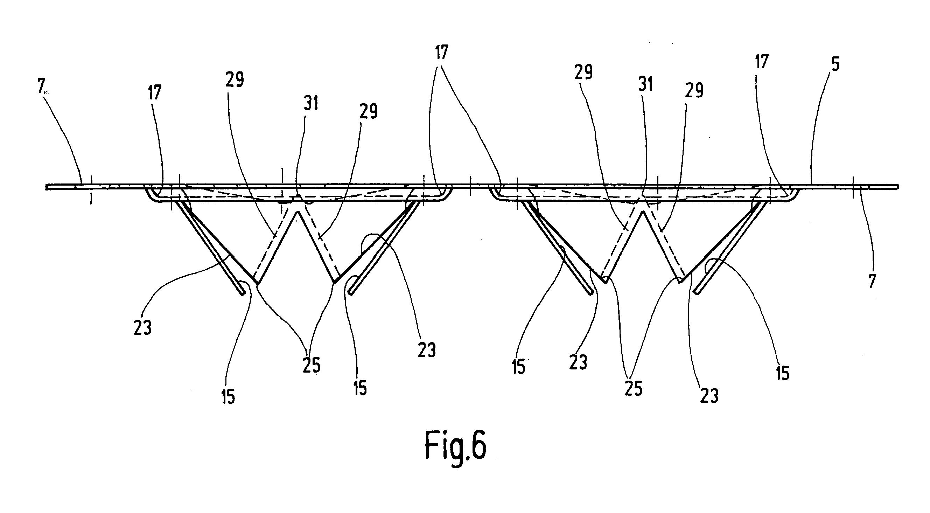

Entlang sämtlicher Seitenränder der Durchbrüche 11 bildet das Trägerblech 5 einen leicht eingewölbten Sitz 17, in den die in Fig. 4 und 5 gesondert dargestellten Einsatzkörper 19 bzw. 21 einsetzbar sind. Die in Fig. 4 gezeigten Einsatzkörper 19, die im Eingangsteil der Beschreibung sowie in den Patentansprüchen als "zweiter Einsatzkörper" bezeichnet sind, weisen die mit ihnen einstückig ausgebildeten Blattfederelemente 23 auf, die als Flatterventil-Schließkappen fungieren. Die in Fig. 5 gezeigten Einsatzkörper 21, im Eingangsteil der Beschreibung und in den Patentansprüchen als "erster Einsatzkörper" bezeichnet, bilden Düseneinsätze, die, wie nachstehend erläutert, Wandteile 29 als Strömungs-Leitflächen aufweisen, deren in Fig. 6 jeweils mit 25 bezeichneter Endrand als Ventilsitzfläche dient.

Die Gestaltung der Einsatzkörper 19 mit den an ihnen einstückigen Blattfederelementen 23 ist am deutlichsten aus Fig. 4 zu ersehen. Danach handelt es sich um dünnwandige Körper, deren Umriss den den Sitz 17 bildenden Rändern der Durchbrüche 11 des Trägerbleches 5 angepaßt ist, wobei jeder Einsatzkörper 19 seinerseits einen Durchbruch 27 aufweist, von deren einander gegenüberliegenden, voneinander entfernteren Randbereichen die Blattfederelemente 23 abgebogen sind. Letztere sind im gleichen Neigungssinn abgebogen wie die die Abstützflächen 15 bildenden Teile des Trägerbleches 5, so dass, wenn die Einsatzkörper 19 im betreffenden Sitz 17 des Trägerbleches 5 aufgenommen sind, sich die Blattfederelemente 23 entlang der Abstützflächen 15 erstrecken.

Vervollständigt wird die Ventileinrichtung durch die in Fig. 5 und 6 näher dargestellten, Düseneinsätze bildenden Einsatzkörper 21.

Fig. 6 verdeutlicht den eingebauten Zustand der Einsatzkörper 21, wobei ersichtlich ist, dass Wandteile 29, von einem Scheitelbereich 31 ausgehend, der sich senkrecht zur Längsrichtung der Durchbrüche 11 im Trägerblech 5 erstreckt, sich in Strömungsrichtung geneigt erstrecken, wobei benachbarte Wandteile 29 am Scheitelbereich 31 miteinander einen spitzen Winkel einschließen. Wie ebenfalls aus Fig. 6 deutlich zu ersehen ist, wird zwischen den freien Endrändern 25 dieser Wandteile 29 und der benachbarten Abstützfläche 15 ein Spalt gebildet, der die Durchgangsöffnung bildet, wenn das betreffende Blattfederelement 23, das in Fig. 6 in Schließstellung am Endrand 25 anliegend dargestellt ist, sich durch Fluiddruckeinfluss von der Ventilsitzfläche am Endrand 25 entfernt und an der Abstützfläche 15 zur Anlage kommt.

Wie aus Fig. 1, 2 und 5 ersichtlich ist, sind die als Düseneinsatz gestalteten Einsatzkörper 21 zusätzlich durch Seitenwände 33 (in den Fig. nicht sämtliche beziffert) sowie zwischen diesen mittig angeordnete Längswände 35 vervollständigt, die jeweils Strömungs-Leitflächen bilden.

Vorliegend ist die Erfindung am Beispiel des Einsatzes der Ventileinrichtung zur Regulierung einer Abgasrückführung bei Verbrennungsmotoren erläutert. Es versteht sich jedoch, dass die Erfindung gleichermaßen auch zur Steuerung andersartiger Fluidströme benutzt werden kann, beispielsweise für eine von Differenzdruck abhängige Steuerung des Durchflusses von Kühlwasser in einem Leitungssystem. Beispielsweise könnte die Ventileinrichtung dazu benutzt werden, um bei Kühlkreisläufen von Verbrennungsmotoren Systemabschnitte mittels Differenzdruck gesteuert zu öffnen und zu schließen, um die Dauer von Warmlaufphasen in gewünschter Weise zu verkürzen. Dadurch, dass erfindungsgemäß als Grundkörper der Ventileinrichtung ein flächiges Trägerblech 5 vorgesehen ist, das in der Art einer Flachdichtung einspannbar ist, könnte das Trägerblech durch eine Zylinderkopfdichtung oder einen Teil einer solchen gebildet sein, wobei die die Einsatzkörper tragenden Durchbrüche Durchgänge für Kühlmittel in der Zylinderkopfdichtung sein könnten.

## Patentansprüche

1. Ventileinrichtung zum Sperren und Freigeben eines Durchganges zwischen mit Fluiddruck belastbaren Druckräumen, insbesondere eines Durchganges zur Abgasrückführung bei Verbrennungsmotoren, mit mindestens einem Blattfederelement (23), das zur Bildung eines Flatterventils zwischen einer Ventilsitzfläche (25) an einem Einsatzkörper (21) und einer die Öffnungsbewegung des Blattfederelementes (23) von der Ventilsitzfläche (25) weg begrenzenden Abstützfläche (15) angeordnet ist, **dadurch gekennzeichnet, dass** ein zwischen die Druckräume einsetzbares Trägerblech (5) an zumindest einem Durchbruch (11) zumindest eine Abstützfläche (15) als einstückig abgebogenes Teil und am jeweiligen Durchbruch (11) einen Sitz (17) für einen das betreffende Blattfederelement (23) tragenden zweiten Einsatzkörper (19) und den die Ventilsitzfläche (25) bildenden ersten Einsatzkörper (21) aufweist.

2. Ventileinrichtung nach Anspruch 1, **dadurch gekennzeichnet, dass** das Trägerblech (5) in der Art einer Flachdichtung zwischen den Druckräumen einspannbar ist und dass eine längs der Seitenränder des Trägerbleches (5) ununterbrochen ausgebildete Dichtsicke (9) und/oder an den Rändern von Einsatzkörpern (19, 21) ausgebildete Dichtsicken vorgesehen sind.

3. Ventileinrichtung nach Anspruch 1 oder 2, **dadurch gekennzeichnet, dass** an jedem Durchbruch (11) des Trägerbleches (5) an zwei parallelen, einander gegenüberliegenden geraden Rändern (13) des Durchbruches (11) je ein Teil als Abstützfläche (15) in Richtung der Strömung des durchfließenden Fluides und zueinander hin abgebogen sind.

4. Ventileinrichtung nach Anspruch 3, **dadurch gekennzeichnet, dass** die die Abstützfläche (15) bildenden Teile in einem im Bereich von 40° bis 60° gelegenen Winkel gegenüber der Ebene des Trägerbleches (5) abgebogen sind.

5. Ventileinrichtung nach Anspruch 4, **dadurch gekennzeichnet, dass** der Sitz (17) für ersten (21) und zweiten Einsatzkörper (19) an den Rändern der im Umriss im großen Ganzen rechteckförmigen Durchbrüche (11) im Trägerblech (5) vorgesehen ist.

6. Ventileinrichtung nach Anspruch 5, **dadurch gekennzeichnet, dass** die zweiten Einsatzkörper (19) dünnwandige Körper sind, deren Umriss den den Sitz (17) bildenden Rändern der Durchbrüche (11) des Trägerbleches (5) angepaßt ist und die ihrerseits Durchbrüche (27) bilden, die mit den Durchbrüchen (11) des Trägerbleches (5) näherungsweise dekkungsgleich sind, wobei an zwei einander gegenüberliegenden Rändern die Blattfederelemente (23) einstückig so abgebogen und geformt sind, dass sie sich entlang der jeweils benachbarten Abstützfläche (15) des Trägerbleches (5) erstrecken.

7. Ventileinrichtung nach Anspruch 6, **dadurch gekennzeichnet, dass** das Trägerblech (5) im großen Ganzen rechteckförmig ist und in zueinander symmetrischer Anordnung vier gleichartige Durchbrüche (11) für die Aufnahme jeweils gleichartiger erster (21) und zweiter Einsatzkörper (19) aufweist.

8. Ventileinrichtung nach einem der Ansprüche 1 bis 7, **dadurch gekennzeichnet, dass** der jeweilige erste Einsatzkörper (21) als Düseneinsatz gestaltet ist, der Wandteile (29) aufweist, die sich von einer vom Sitz (17) des Trägerbleches (5) getragenen Randeinfassung weg entlang der Strömung des Fluides erstrecken und zusammen mit dem sich entlang der zugeordneten Abstützflächen (15) erstreckenden Blattfederelement (23) Strömungs-Leitflächen bilden.

9. Ventileinrichtung nach Anspruch 8, **dadurch gekennzeichnet, dass** die Wandteile (29) von einem Scheitelbereich (31), der sich an die Randeinfassung anschließt, ausgehen und miteinander einen spitzen Winkel einschließen, dergestalt, dass eine zur jeweils benachbarten Abstützfläche (15) konvergierend verlaufende Ebene gebildet wird und die Wandteile (29) zwischen ihrem Endrand (25) und der Abstützfläche (15) einen den Durchgang des Fluides begrenzenden Spalt definieren.

10. Ventileinrichtung nach Anspruch 9, **dadurch gekennzeichnet, dass** die den Spalt begrenzenden Endränder (25) der Wandteile (29) Ventilsitzflächen für das den Spalt jeweils verschließende Blattfederelement (23) bilden.
